# EUROPEAN PATENT SPECIFICATION

(11) **EP 2 222 142 B1**
(45) Date of publication and mention of the grant of the patent: **10.01.2018**
(21) Application number: 10001588.2
(22) Date of filing: 17.02.2010
(51) Int. Cl.: H05B 41/298

(54) **Discharge lamp lighting device and illumination fixture**
Entladungslampenbeleuchtungsvorrichtung und Beleuchtungsbefestigung
Dispositif d'éclairage par lampe à décharge et accessoire d'illumination

(30) Priority: 24.02.2009 JP 2009041505
(43) Date of publication of application: 25.08.2010
(73) Proprietor: Panasonic Intellectual Property Management Co., Ltd., Osaka-shi, Osaka 540-6207 (JP)
(72) Inventor: Hasegawa, Junichi, Kashiwara, Osaka (JP); Matsuzaki, Nobutoshi, Nevagawa, Osaka (JP)
(74) Representative: Rüger, Barthelt & Abel

(56) References cited:
- EP-A2- 0 796 036
- EP-A2- 1 672 963
- WO-A1-03/039206
- WO-A1-2008/117673
- JP-A- 2005 158 365
- US-A- 6 072 283
- US-A1- 2002 047 609

## Description

### [Field of the Invention]

The present invention relates to a discharge lamp lighting device and an illumination fixture.

### [Background Art]

WO 2008/117673 A1 shows a discharge lamp lighting device according to the preamble of claim 1.

EP 1 672 963 A2 discloses a discharge lamp lighting device which calculates the impedance of the filament of the discharge lamp during preheating from the measured current through the filament and measured the voltage across the filament. The calculated impedance is compared with a predetermined impedance value. The preheating is stopped and discharge lamp is lighted when the predetermined impedance value is reached.

A ballast for a discharge lamp is disclosed in US 6 072 283. The power supplied to the discharge lamp is regulated. In so doing the voltage and the current of the lamp is sensed. A preheat period after a start-up period and the regular operation is not disclosed.

As a discharge lamp lighting device for lighting a hot cathode type discharge lamp such as a high-pressure discharge lamp called an HID (High-intensity discharge lamp), a discharge lamp lighting device including: a power conversion part for receiving direct-current power and outputting alternating-current power; and a control part for controlling the power conversion part.

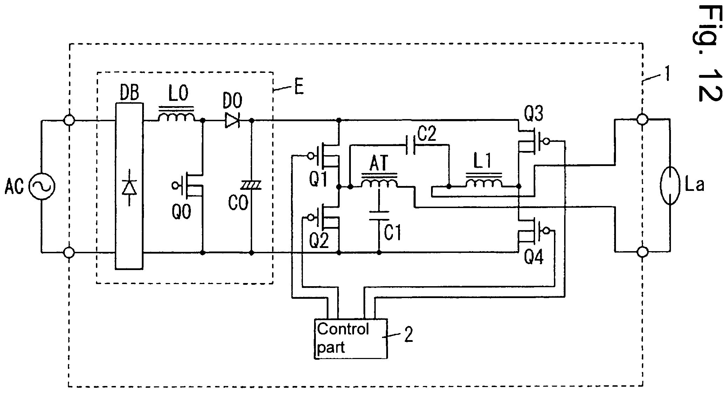

As this type of discharge lamp lighting device, there is, for example, a type shown in Fig. 12. A discharge lamp lighting device 1 of Fig. 12 will be explained below.

The discharge lamp lighting device 1 of Fig. 12 includes a direct-current power source E for converting an alternating-current power, for example, supplied from an alternating-current power source AC such as a commercial power source into direct-current power.

The direct-current power source E includes a diode bridge DB of which output terminal on a lower voltage side is connected to the ground and that rectifies in full wave alternating-current power inputted from an alternating-current power source AC, a diode D0 of which anode is connected to an output terminal on a higher voltage side of the diode bridge DB via an inductor L0 and of which cathode is connected to the ground via an output capacitor C0, a switching element Q0 whose one end is connected to a connecting point between the inductor L0 and the diode D0 and whose another end is connected to the ground, and a drive circuit (not shown in the drawing) for controlling the switching element Q0 to be on or off so that an output voltage of the direct-current power source E, that is, a voltage between both ends of the output capacitor C0 can be kept constant. Specifically, the direct-current power source E is configured by connecting a commonly-known step-up converter (a step-up chopper circuit) between output terminals of the diode bridge DB.

In addition, the discharge lamp lighting device 1 includes a full bridge circuit including four switching elements Q1 to Q4 as a power conversion part for converting direct-current power inputted from the direct-current power source E into alternating-current power. A field effect transistor (FET) can be used as the switching elements Q1 to Q4. Moreover, one of the output terminal of the above-mentioned full bridge circuit, that is, a connecting point of the switching elements Q1 and Q2 constituting one of two series circuits, each of which includes two of the switching elements Q1 to Q4 and is connected between the output terminals of the direct-current power source E in parallel with each other is connected to one end of a discharge lamp La (that is, one of the electrodes) via a whole winding that is a secondary side of an auto transformer AT. Additionally, a tap provided to the auto transformer is connected to the ground via a first capacitor C1. Furthermore, the other one of the output terminals of the above-mentioned full bridge circuit, that is, a connecting point of the switching elements Q3 and Q4 constituting the other series circuit is connected to the other end (that is, the other electrode) of the discharge lamp La via the inductor L1. In addition, a second capacitor C2 is connected between the connecting point of the switching elements Q1 and Q2 constituting the above-mentioned one of the series circuit and the connecting point of the inductor L1 and discharge lamp La. That is, the auto transformer At, the first capacitor C1, the second capacitor C2, and the inductor L1 constitute a resonance circuit connected between the output terminals of the power conversion part (hereinafter referred to as "a load circuit") together with the discharge lamp La.

Moreover, the discharge lamp lighting device 1 includes a control part 2 for driving each of the switching elements Q1 to Q4 constituting the power conversion part respectively. The control part 2 drives the switching elements Q1 to Q4 to be on or off so that a diagonally-positioned pair among the switching elements Q1 to Q4 can be turned on at the same time and a pair connected with each other in series among the switching elements Q1 to Q4 can be alternately turned on or off. In this manner, the direct-current power inputted from the direct-current power source E is converted into an alternating-current power, and a frequency of the alternating-current power becomes a polarity reversal frequency generated by the above-mentioned on-off drive (hereinafter referred to as "an operational frequency").

Furthermore, as this type of the discharge lamp lighting device 1, a device where when staring the discharge lamp La, the control part 2 carries out an electrode heating operation for relatively increasing a frequency of output power of a power conversion part to heat each electrode of the discharge lamp La before starting a regular operation to output an alternating-current used for maintaining the lighting of the discharge lamp La from the power conversion part to the discharge lamp La and after a start-up operation to start the discharge lamp La by relatively increasing an output voltage on the power conversion part is provided (for example, refer to Patent document 1 Japanese Translation of PCT No.2005-507553).

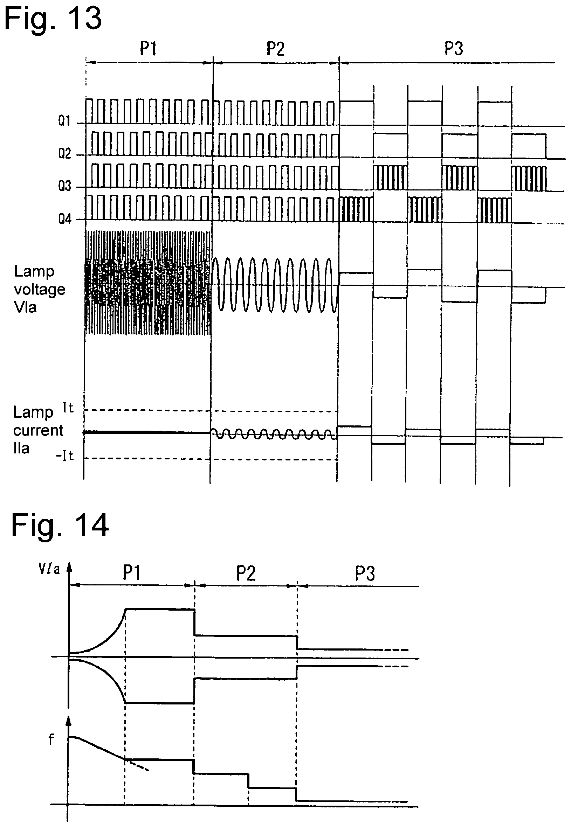

Referring to Fig. 13, an operation of the control part 2 in a case where the above-mentioned technique has been applied will be explained in detail. Here, upper four waveforms of Fig. 13 show drive signals inputted to the respective switching elements Q1 to Q4, that is, voltages applied between the gate and the source in particular, and the respective switching elements Q1 to Q4 are turned on in periods when the above-mentioned drive signals are in an H level and turned off in periods when the above-mentioned drive signals are in an L level. In addition, horizontal axes of the respective graphs of Fig. 13 represent time. When a power source is turned on, the control part 2 firstly starts a start-up operation to start the discharging in the discharge lamp La. During the start-up period P1 when the start-up operation is carried out, the control part 2 sufficiently raises a voltage Vla outputted to the discharge lamp La (hereinafter referred to as "a lamp voltage") to start the discharging in the discharge lamp La by setting the operational frequency approximately to a resonant frequency of the load circuit under a state where the discharge lamp La is lighted off (hereinafter referred to as "a lighting-off resonant frequency"), for example, a few dozen kHz to a few hundreds kHz in particular. That is, the lighting-off resonant frequency is a resonant frequency (or a reciprocal number of the integral number) of a resonant circuit configured by: a portion (a primary winding portion) between the connecting point of the switching elements Q1 and Q2 in the auto transformer AT and the tap; and the first capacitor C1. When the lamp voltage Vla that is a voltage obtained by stepping up the resonant voltage generated in the start-up period P1 with the auto transformer AT is raised to a voltage required for the start-up, that is, the start of glow discharge, the discharge lamp La starts-up and an output current to the discharge lamp La starts to flow. Specifically, the auto transformer AT and the first capacitor C1 constitute a start-up part in claims.

After the above-mentioned start-up period P1, the control part 2 shifts to an electrode heating period P2 when the electrode heating operation is carried out. In the example of Fig. 13, the operational frequency is maintained also in the electrode heating period P2 at the same frequency as the operational frequency in the start-up period P1.

Then, after the electrode heating operation is carried out for, for example, a predetermined time, the control part 2 shifts to a regular period P3 when the regular operation is carried out. As a temperature in the discharge lamp La rises, the lamp voltage V gradually rises for a few minutes immediately after the shift to the regular period P3 and then stabilizes. The operational frequency f in the regular operation is, for example, a few dozen Hz to a few hundreds Hz. In the example of Fig. 13, the control part 2 in the regular period P3 controls output power to the discharge lamp La with a PWM control to turn on or off one pair of the respective switching elements Q3 and Q4 of pairs of the switching elements Q1 to Q4 connected with each other in series at a duty ratio depending on a power to be outputted to the discharge lamp La and at a sufficiently higher frequency than the operational frequency f without necessarily turning on the switching elements Q3 and Q4 constantly also in a period when the diagonally-positioned switching elements Q1 and Q2.

Here, in the example of Fig. 13, since the same operation frequency is employed in the start-up period P1 and in the electrode heating period P2, amplitude of the lamp current 11a is smaller than an amplitude It required to sufficiently heat an electrode of the discharge lamp La.

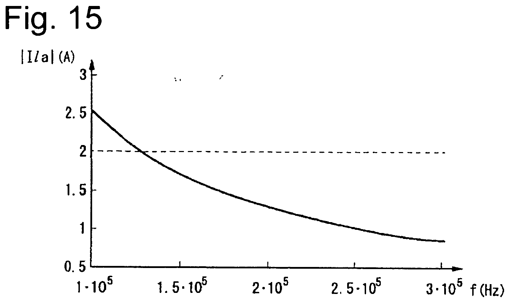

Then, as shown in Fig. 14, it is proposed to decrease the operation frequency f in a transitional phase from the star-up period P1 to the electrode heating period P2. That is, since the operation frequency f is in a range where amplitude |Ila| of the lamp current Ila monotonically decreases with respect to the operation frequency f as shown in Fig. 15, the control part 2 decreases the lamp voltage Vla to increase the lamp current Ila in the electrode heating period P2 by setting the operation frequency f to be lower than operation frequency f upon termination. In this manner, the lamp current Ila in the electrode heating period P2 can be sufficiently increased (that is, sufficiently increasing the amplitude), and the discharge in the discharge lamp La can be shifted from the grow discharge to the arc discharge and stabilized. In addition, each of the electrodes of the discharge lamp La is heated respectively, and accordingly asymmetry current caused by a temperature difference between the electrodes of the discharge lamp La is also decreased after the electrode heating period P2.

Additionally, in an example of Fig. 14, the control part 2 gradually increases the lamp voltage Vla by gradually moving the operation frequency f closer to a resonant frequency upon lighting-off from a frequency sufficiently higher than the resonant frequency upon lighting-off in the start-up period P1.

Moreover, in the example of Fig. 14, the operation frequency f is further decreased in the middle of the electrode heating period P2; however, both of two values taken by the operation frequency f in the electrode heating period P2 are preliminarily-set values.

According to the above-mentioned discharge lamp lighting device, the discharge in the discharge lamp La is shifted from the grow discharge to the arc discharge in a electrode heating operation, and thereby stabilizing the discharge after transition to a normal operation in comparison to a case where the electrode heating operation is not carried out and preventing the lighting device from suddenly going-out.

### [Conventional Technique Document]

### [Patent Document]

Patent document 1: Japanese Translation of PCT No.2005-507553

### [Disclosure of the Invention]

### [Problems to be solved by the Invention]

Impedance of a load circuit changes due to variations of characteristics of a circuit component and the discharge lamp La and due to an ambient temperature. Accordingly, as in the above-mentioned conventional example, when a value taken by the operation frequency f in the electrode heating operation is preliminarily determined, it can be considered that a lamp current runs short in the electrode heating operation and accordingly the lighting of the discharge lamp La in the subsequent normal operation is not stabilized or that conversely an excessive lamp current flows and accordingly an excessive electric stress is applied to the circuit component and the discharge lamp La.

The present invention considers the above-mentioned problems, and a purpose of the present invention is to provide a discharge lamp lighting device and an illumination fixture able to optimize an output current to the discharge lamp in the electrode heating operation.

### [Means adapted to solve the Problems]

According to a first aspect of the present invention, a discharge lamp lighting device includes: a power conversion part for receiving a direct-current power and outputting an alternating-current power; a start-up part for generating a high voltage to start-up a discharge lamp, the start-up part being connected between output ends of the power conversion part together with the discharge lamp; a control part for controlling the power conversion part; a lamp current detection part for detecting amplitude of an output current to the discharge lamp; and a lamp voltage detection part for detecting amplitude of an output voltage to the discharge lamp, wherein in the start-up of the discharge lamp, after a start-up operation to start-up the discharge lamp by using the high voltage generated by the start-up part, and before a regular operation to make the power conversion part output alternating-current power for maintenance of lighting of the discharge lamp to the discharge lamp starts, the control part carries out an electrode heating operation to increase a frequency of an output of the power conversion part to be higher than that in the regular operation, and in an electrode heating operation, controls the power conversion part in a feed-back manner so as to set the amplitude of the output current detected by the lamp current detection part to a target current amplitude based on the amplitude of the output voltage detected by the lamp voltage detection part.

According to the invention, the output current to the discharge lamp in the electrode heating operation can be optimized in a feed-back control to set the amplitude of the output current to be the target current amplitude depending on the amplitude of the output voltage.

According to a second aspect of the present invention, in the first aspect of the present invention, the power conversion part includes: a step-down chopper circuit for stepping-down the inputted direct-current; and a full bridge circuit for alternating the direct-current power outputted by the step-down chopper circuit.

According to a third aspect of the present invention, in the first aspect of the present invention, the power conversion part includes a full bridge circuit, and the control part controls in the regular operation output power of the power conversion part on the basis of an on-off duty ratio of a switching element constituting the full bridge circuit.

According to a fourth aspect of the present invention, in the first aspect of the present invention, the power conversion part includes a half bridge circuit, and the control part controls in the regular operation output power of the power conversion part on the basis of an on-off duty ratio of a switching element constituting the half bridge circuit.

According to a fifth aspect of the present invention, in any one of the first to fourth aspects of the present invention, the target current amplitude includes two values or more.

According to a sixth aspect of the present invention, in any one of the first to fifth aspects of the present invention, the control part carries out a discharge judgment for judging on the basis of the amplitude of the output voltage whether the discharge in the discharge lamp is a glow discharge or an arc discharge and determines the target current amplitude on the basis of the judgment result.

According to a seventh aspect of the present invention, in the fifth aspect of the present invention, as the amplitude of the output voltage detected by the lamp voltage detection part becomes large, the control part reduces the target current amplitude more.

According to an eighth aspect of the present invention, in the seventh aspect of the present invention, the control part employs a value obtained by dividing a predetermined target power by the voltage amplitude detected by the lamp voltage detection part as the target current amplitude.

According to a ninth aspect of the present invention, in the eighth aspect of the present invention, the target power is a value so high as to maintain the discharge in the discharge lamp.

According to a tenth aspect of the present invention, in any one of the first to ninth aspects of the present invention, the control part controls a frequency of the output of the power conversion part.

According to an eleventh aspect of the present invention, an illumination fixture includes: the discharge lamp lighting device according to any one of first to tenth aspects of the present invention; and a fixture body having the discharge lamp lighting device.

### [Effect of the Invention]

According to a first aspect of the present invention, an output current to the discharge lamp in the electrode heating operation can be optimized in a feed-back control to set an amplitude of the output current to be a target current amplitude based on the amplitude of the output voltage.

### [Brief Description of the Drawings]

[Fig. 1] Fig. 1 is an explanation view showing one example of temporal changes of an operation frequency, a voltage amplitude, and a current amplitude in an embodiment of the present invention.
[Fig. 2] Fig. 2 is a circuit block diagram showing the same as above.
[Fig. 3] Fig. 3 is an explanation view showing one example of a method for determining a target current amplitude based on the voltage amplitude in the same as above.
[Fig. 4] Fig. 4 is an explanation view showing another example of temporal changes of the voltage amplitude and the current amplitude in the same as above.
[Fig. 5] Fig. 5 is an explanation view showing a relationship between the voltage amplitude and the current amplitude in a case there are different three operation frequencies in the same as above.
[Fig. 6] Fig. 6 is an explanation view showing another example of the method for determining the target current amplitude based on the voltage amplitude in the same as above.
[Fig. 7] Fig. 7 is a circuit block diagram showing a modification example same as above.
[Fig. 8] Fig. 8 is a circuit block diagram showing another modification example same as above.
[Fig. 9] Fig. 9 is a perspective view showing one example of an illumination fixture using the same as above.
[Fig. 10] Fig. 10 is a perspective view showing another example of the illumination fixture using the same as above.
[Fig. 11] Fig. 11 is a perspective view showing further another example of the illumination fixture using the same as above.
[Fig. 12] Fig. 12 is a circuit block diagram showing a conventional example.
[Fig. 13] Fig. 13 is an explanation view showing one example of temporal changes of: a voltage of a drive signal inputted into each switching element of a full bridge circuit; a lamp voltage; and a lamp current in the same as above.
[Fig. 14] Fig. 14 is an explanation view showing one example of temporal changes of a lamp voltage and an operation frequency in another conventional example.
[Fig. 15] Fig. 15 is an explanation view showing one example of a relationship between the amplitude and the operation frequency of the lamp current.

### [Best Mode for Carrying Out the Invention]

Referring to drawings, a best mode for carrying out the present invention will be explained below.

Since a basic configuration of the present embodiment is the same as that of a discharge lamp lighting device shown in Fig. 12 and Fig. 13, illustrations and explanations of the same portions will be omitted.

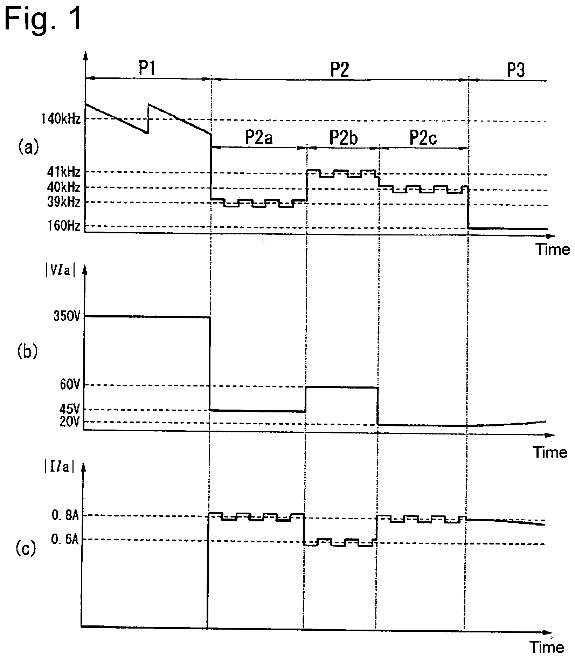

In the present embodiment, as shown in Fig. 1, the control part 2 repeats a start-up operation to repeats an operation to decrease an operation frequency f from an upper limit to a lower limit in a range striding over 140kHz that is approximately one-third of 430kHz of a lighting -off resonant frequency during the start-up period P1. Timing when the control part 2 finishes the start-up operation, for example, may be timing when the beginning of the discharging in the discharge lamp La is detected by a commonly-known technique or may be timing when a predetermined time sufficient to start the discharge lamp La has passed after the beginning of the start-up operation.

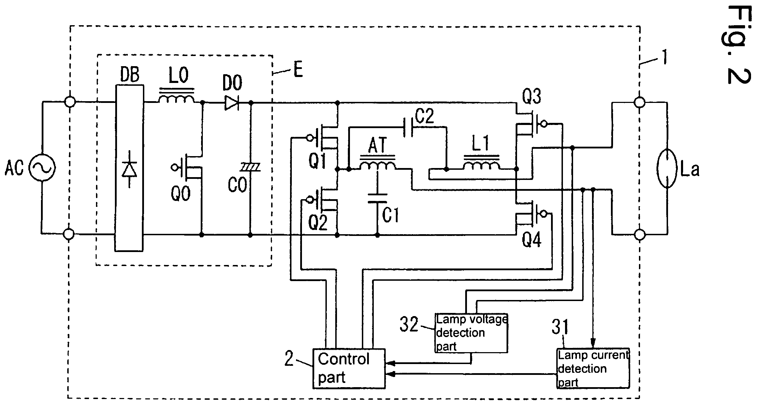

Moreover, as shown in Fig. 2, the present embodiment includes a lamp current detection part 31 for detecting an amplitude of the lamp current Ila (hereinafter referred to as "a current amplitude") |Ila| and a lamp voltage detection part 32 for detecting an amplitude of the lamp voltage |Vla| (hereinafter referred to as "a voltage amplitude") |Vla|.

The control part 2 controls the operation frequency f in the feed-back manner so as to set the current amplitude |Ila| detected by the lamp current detection part 31 to be a target current amplitude It based on the voltage amplitude |Vla| detected by the lamp voltage detection part 32 in the electrode heating period P2.

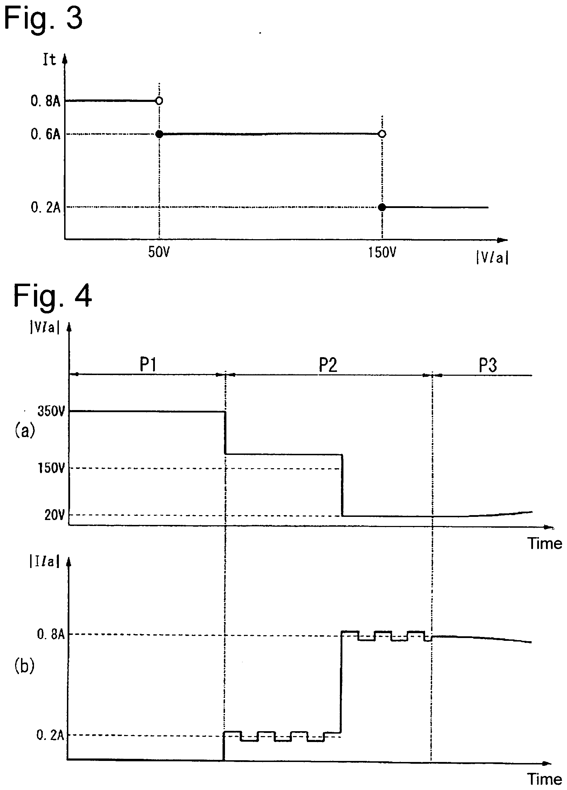

A method for determining the target current amplitude It on the basis of the voltage amplitude |Vla| changes the target current amplitude It in a stepwise fashion on the basis of the voltage amplitude |Vla|, for example, as shown in Fig. 3, when the voltage amplitude |Vla| is less than 50V, the target current amplitude It is 0.8A, when the voltage amplitude |Vla| is 50V or more and is less than 150V, the target current amplitude It is 0.6A, and when the voltage amplitude |Vla| is 150V or more, the target current amplitude It is 0.2A. Here, a rated voltage of the discharge lamp La is 90V, and it can be said that when the voltage amplitude |Vla| is 150V or more, the discharge in the discharge lamp La is the glow discharge, and when the voltage amplitude |Vla| is less than 150V, the discharge in the discharge lamp La is an arc discharge. Accordingly, in the present embodiment, it can be also said that the control part 2 judges on the basis of the voltage amplitude |Vla| whether the discharge in the discharge lamp La is the glow discharge or the arc discharge and determines the target current amplitude It on the basis of the judgment result. In the example of Fig. 1, the voltage amplitude |Vla| is not 150V or more in the electrode heating period P2; however, in the case where the voltage amplitude |Vla| becomes 150V or more in the electrode heating period P2 as shown in Fig. 4, the target current amplitude It is 0.2A.

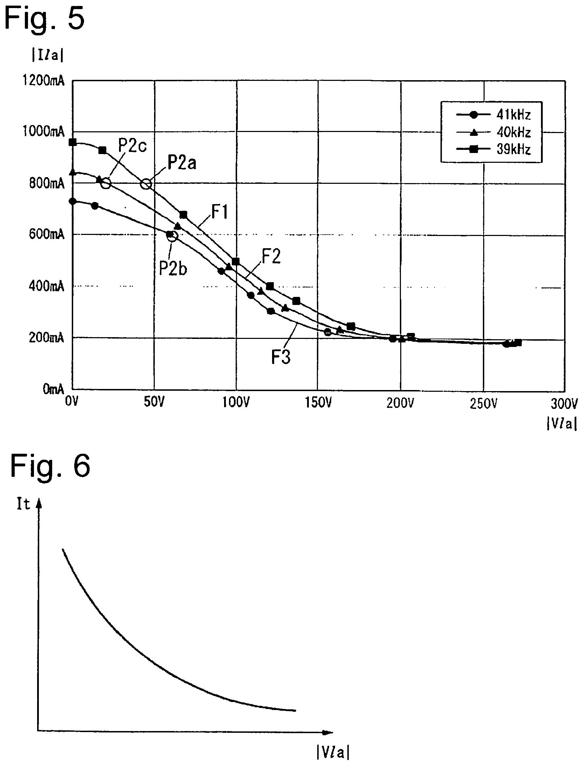

Here, in three cases where the operation frequency f is 39kHz, is 40kHz, and is 41kHz, a relationship between the voltage amplitude |VlaI and the current amplitude |Ila| is shown in Fig. 5. In Fig. 5, a curved line F1 shows a case where the operation frequency f is 39kHz, a curved line F2 shows a case where the operation frequency f is 40kHz, and a curved line F3 shows a case where the operation frequency f is 41kHz. As shown in Fig. 5, since a whole impedance becomes small as the operation frequency f is reduced, the current amplitude |Ila| becomes large. That is, the control part 2 increases the operation frequency f with respect to the target current amplitude It when the current amplitude |Ila| is small and decreases the operation frequency f with respect to the target current amplitude It when the current amplitude |Ila| is large, and thereby moving the current amplitude |Ila| closer to the target current amplitude It. Additionally, in Fig. 5, operation points at three periods P2a, P2b, and P2c in the electrode heating period P2 in Fig. 1 are shown, respectively.

In the present embodiment, the current amplitude |Ila| in the electrode heating period P2 can be adequately maintained when the control part 2 carries out the feed-back control to set the current amplitude |Ila| to the target current amplitude base on the voltage amplitude |Vla| as described above.

Meanwhile, the target current amplitude It is not limited to the above-mentioned three values, and may be two values or may be four or more.

In addition, the change of the target current amplitude It based on the voltage amplitude |Vla| may be continuous instead of the above-mentioned stepwise fashion. For example, as shown in Fig. 6, a value obtained by dividing predetermined target power by the voltage amplitude |Vla| is employed as the target current amplitude It, and thus the target current amplitude It is in inverse proportion to the voltage amplitude |Vla|. That is, the output power to the discharge lamp La is substantially constant regardless of the voltage amplitude |Vla|. It is desirable to suppress power consumption that the above-mentioned target power is set to be as small as possible within the limitation where the discharge can be maintained in the discharge lamp La.

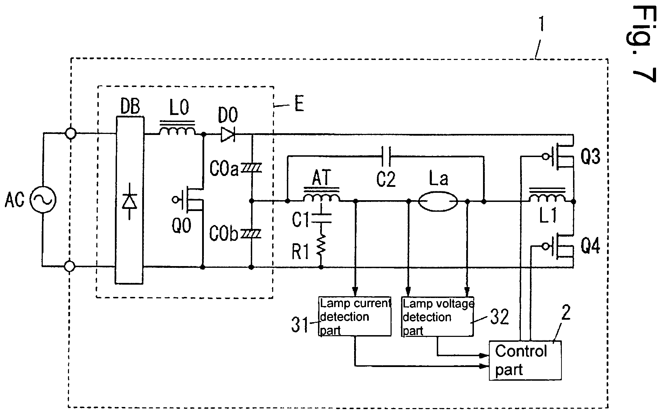

Meanwhile, a circuit configuration is not limited to the above-mentioned configuration, and as shown in Fig. 7, a half bridge circuit configured by replacing the respective switching elements Q1 and Q2 constituting one series circuit by capacitors C0a and C0b may be employed instead of the full bridge circuit shown in Fig. 2. In the example of Fig. 7, the above-mentioned series circuit of the capacitors C0a and COb serves as an output capacitor C0 of the step-up chopper circuit of the direct-current power source E. A resistance R1 is added between a first capacitor C1 and the ground. Also in this case, in the same manner as that of the example of Fig. 13, in the regular period P3, a PWM control for adjusting output power to the discharge lamp La is carried out on the basis of an on-off duty ratio of the switching elements Q3 and Q4 to be turned on in a period when the polarity is not inversed.

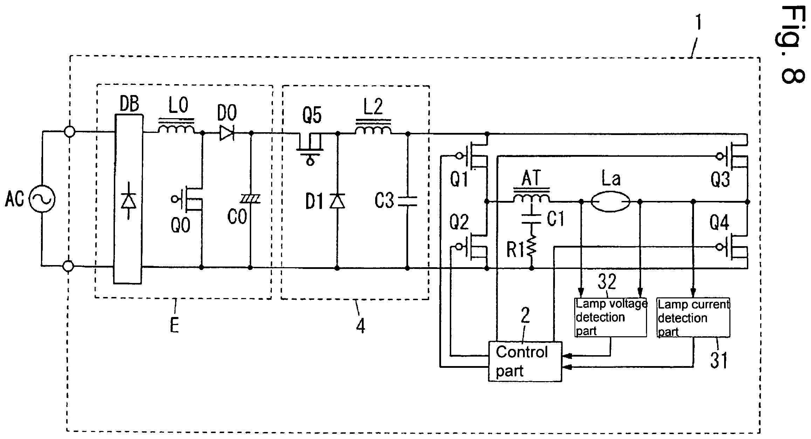

Or, as shown in Fig. 8, a step-down chopper circuit 4 for stepping down the output voltage of the direct-current power source E and outputting the voltage to the full bridge circuit may be provided. In this case, the power conversion circuit according to claims includes: a full bridge circuit constituted by four switching elements Q1 to Q4; and the above-mentioned step-down chopper circuit 4. In the example of Fig. 5, the step-down chopper circuit 4 includes: a switching element Q5 whose one end is connected to an output end on a high voltage side of the direct-current power source E and whose another end is connected to an input end of the full bridge circuit via an inductor L2; a diode D1 whose cathode is connected to a connecting point between the switching element Q5 and the inductor L2 and whose anode is connected to the ground; and a capacitor C3 connected between input ends of the full bridge circuit, that is, between output ends of the step-down chopper circuit 4. Additionally, in the example of Fig. 5, an inductor L1 and a second capacitor C2 are omitted from the load circuit respectively, and in the start-up operation, a starting high voltage is outputted to the discharge lamp La because of resonance of a resonance circuit including the first capacitor and an autotransformer AT. That is, only the first capacitor C1 and autotransformer AT constitute the start-up part in claims. In this case, since the control part 2 can control supply power to the discharge lamp La on the basis of the on-off duty ratio of the switching element Q5 of the step-down chopper circuit 4, the PWM control based on the on-off duty ratios of the switching elements Q1 to Q4 of the full bridge circuit does not have to be carried out even in the regular period P3.

In addition, as the feed-back control carried out by the control part 2, a control to change output voltages of the direct-current power source E and the step-down chopper circuit 4 can be considered other than a control to change the operation frequency f as described above.

Since each of the above-mentioned types of the control part 2, the lamp current detection part 31, and the lamp voltage detection part 32 can be realized by a commonly-known electronic circuit, detailed drawings and explanations are omitted.

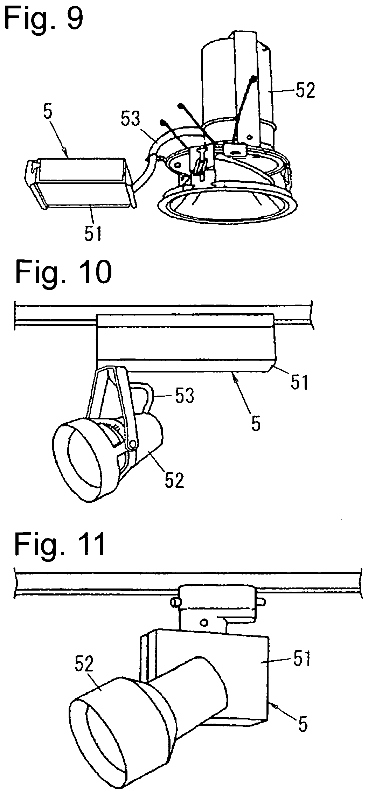

The above-mentioned types of the discharge lamp lighting device 1 can be used for the illumination fixture 5, for example, shown in Figs. 9 to 11. The illumination fixtures 5 shown in Figs. 9 to 11 includes: a fixture body 51 housing the discharge lamp lighting device 1; and a lighting body 52 having the discharge lamp La, respectively. In addition, the illumination fixture 5 of Fig. 9 and the illumination fixture 5 of Fig. 10 include a power supply line 53 electrically connecting the discharge lamp lighting device 1 to the discharge lamp La, respectively. The illumination fixture 5 of Fig. 9 is a downlight whose fixture body 51 and the lighting body 52 are both fixed to a ceiling surface, and the illumination fixture 5 of Fig. 10 and the illumination fixture 5 of Fig. 11 are spotlights whose lighting body 52 is attached so as to allow oscillation with respect to the fixture body 51 fixed to an attachment surface such as the ceiling surface, respectively. Since the above-mentioned types of the illumination fixtures 5 can be realized by a commonly-known technique, detailed explanations are omitted.

### [Description of Reference Numerals]

1 Discharge lamp lighting device
2 Control part
4 Step-down chopper circuit
5 Illumination fixture
31 Lamp current detection part
32 Lamp voltage detection part
51 Fixture body

## Claims

1. A discharge lamp lighting device (1) for a high-pressure discharge lamp (La) comprising:
four switching elements (Q1, Q2, Q3, Q4) constituting a power conversion part for receiving a direct-current power from a direct current power source (E) and outputting an alternating-current power, whereby two of the four switching elements (Q1 and Q2) are connected via a first connecting point and constitute a series circuit and the other two of the four switching elements (Q3, Q4) are connected via a second connecting point and constitute a further series circuit, both series circuits are connected between the output terminals of the direct-current power source (E) in parallel with each other;
one end of the discharge lamp (La) is connected to a secondary side of an auto transformer (AT), the other end of the discharge lamp (La) is connected to the second connection point, the primary side of the auto transformer (AT) is connected to the first connecting point, a tap of the auto transformer (AT) is connected to the ground via a first capacitor (C1),
the auto transformer (AT) and the first capacitor (C1) constitute a start-up part (AT, C1) for generating a voltage (Vla) to start-up the high-pressure discharge lamp (La),;
a control part (2) for controlling the power conversion part;
a lamp current detection part (31) for detecting an amplitude of a lamp current (Ila) to the high-pressure discharge lamp (La); and
a lamp voltage detection part (32) for detecting an amplitude of an lamp voltage (Vla) to the high-pressure discharge lamp (La), wherein during the start-up period (P1) the control part (2) carries out a start-up operation (P1) to start-up the high-pressure discharge lamp (La) by using the voltage generated by the start-up part (AT, C1),
whereby the start-up period (P1) ends when the discharge of the discharge lamp (La) begins or when a predetermined time has elapsed since beginning of the start-up period (P1),
whereby during a regular period (P3) the control part (2) carries out a regular operation and controls the power conversion part to output the alternating-current (Ila) to the high-pressure discharge lamp for maintenance of lighting of the high-pressure discharge lamp (La),
**characterized in that** after the end of the start-up period (P1) and before the regular operation starts, the control part (2) carries out an electrode heating operation during a heating period (P2) by increasing a frequency of the lamp current (Ila) provided by the power conversion part to be higher than that in the regular operation, whereby in said electrode heating operation the control part (2) controls the power conversion part in a feed-back manner so as to set the amplitude of the lamp current (Ila) detected by the lamp current detection part (31) to a target current amplitude (It), wherein the control part (2) carries out a discharge judgment for judging depending on a comparison of the amplitude of the lamp voltage (Vla) with a reference value whether the discharge in the discharge lamp (La) is a glow discharge or an arc discharge and determines the target current amplitude (It) on the basis of a discharge judgment result.

2. A discharge lamp lighting device (1) for a high-pressure discharge lamp (La) comprising:
two switching elements (Q3, Q4) and two capacitors (C0a, C0b) constituting a power conversion part for receiving a direct-current power from a direct current power source (E) and outputting an alternating-current power, whereby the two capacitors (C0a, C0b) are connected via a first connecting point and constitute a series circuit and the two switching elements (Q3, Q4) are connected via a second connecting point and constitute a further series circuit, both series circuits are connected between the output terminals of the direct-current power source (E) in parallel with each other;
one end of the discharge lamp (La) is connected to a secondary side of an auto transformer (AT), the other end of the discharge lamp (La) is connected to the second connection point via an inductor (L1), the primary side of the auto transformer (AT) is connected to the first connecting point, a tap of the auto transformer (AT) is connected to the ground via a first capacitor (C1) and a resistance (R1), and a second capacitor (C2) is connected between the first connecting point and the connecting point between the inductor (L1) and the discharge lamp (La),
the auto transformer (AT) and the first capacitor (C1) constitute a start-up part (AT, C1) for generating a voltage (Vla) to start-up the high-pressure discharge lamp (La),;
a control part (2) for controlling the power conversion part;
a lamp current detection part (31) for detecting an amplitude of a lamp current (Ila) to the high-pressure discharge lamp (La); and
a lamp voltage detection part (32) for detecting an amplitude of an lamp voltage (Vla) to the high-pressure discharge lamp (La), wherein during the start-up period (P1) the control part (2) carries out a start-up operation (P1) to start-up the high-pressure discharge lamp (La) by using the voltage generated by the start-up part (AT, C1),
whereby the start-up period (P1) ends when the discharge of the discharge lamp (La) begins or when a predetermined time has elapsed since beginning of the start-up period (P1),
whereby during a regular period (P3) the control part (2) carries out a regular operation and controls the power conversion part to output the alternating-current (Ila) to the high-pressure discharge lamp for maintenance of lighting of the high-pressure discharge lamp (La),
**characterized in that** after the end of the start-up period (P1) and before the regular operation starts, the control part (2) carries out an electrode heating operation during a heating period (P2) by increasing a frequency of the lamp current (Ila) provided by the power conversion part to be higher than that in the regular operation, whereby in said electrode heating operation, the control part (2) controls the power conversion part in a feed-back manner so as to set the amplitude of the lamp current (Ila) detected by the lamp current detection part (31) to a target current amplitude (It), wherein the control part (2) carries out a discharge judgment for judging depending on a comparison of the amplitude of the lamp voltage (Vla) with a reference value whether the discharge in the discharge lamp (La) is a glow discharge or an arc discharge and determines the target current amplitude (It) on the basis of a discharge judgment result.

3. The discharge lamp lighting device (1) according to claim 1 or 2, wherein
the power conversion part includes: a step-down chopper circuit (4) for stepping-down the inputted direct-current; and is a full bridge circuit (Q1, Q2, Q3, Q4) for alternating the direct-current power outputted by the step-down chopper circuit (4).

4. The discharge lamp lighting device according to claim 1, wherein
the power conversion part is a full bridge circuit (Q1, Q2, Q3, Q4), and the control part (2) controls in the regular operation output power (Ila, Vla) of the power conversion part on the basis of an on-off duty ratio of the switching elements (Q3, Q4) constituting the full bridge circuit (Q1, Q2, Q3, Q4).

5. The discharge lamp lighting device according to claim 2, wherein
the power conversion part is a half bridge circuit, (Q3, Q4) and the control part controls in the regular operation output power (Ila, Vla) of the power conversion part on the basis of an on-off duty ratio of the switching elements (Q3, Q4) constituting the half bridge circuit (Q3, Q4).

6. The discharge lamp lighting device according to any one of claims 1 to 5, wherein
the target current amplitude (It) includes two values or more.

7. The discharge lamp lighting device according to claim 6, wherein the control part (2) reduces the target current amplitude (It) when the amplitude of the lamp voltage (Vla) detected by the lamp voltage detection part (32) increases.

8. The discharge lamp lighting device (1) according to claim 7, wherein
the control part (2) employs a value obtained by dividing predetermined target power by the lamp voltage amplitude detected by the lamp voltage detection part (32) as the target current amplitude (It).

9. The discharge lamp lighting device (1) according to any one of claims 1 to 8, wherein
the control part (2) controls a switching frequency of the switching elements (Q1, Q2, Q3, Q4) of the power conversion part.

10. An illumination fixture comprising: the discharge lamp lighting device (1) according to any one of claims 1 to 9; and a fixture body (51) having the discharge lamp lighting device (1).

## Patentansprüche

1. Entladungslampenbeleuchtungsvorrichtung (1) für eine Hochdruckentladungslampe (La) aufweisend:
vier Schaltelemente (Q1, Q2, Q3, Q4), die einen Leistungswandlerteil bilden zum Empfangen einer Gleichspanunnungsleistung von einer Gleichspannungsleistungsquelle (E) und zum Ausgeben einer Wechselspannungsleistung, wobei zwei der vier Schaltelemente (Q1 und Q2) mittels eines ersten Verbindungspunktes verbunden sind und eine Reihenschaltung bilden und die anderen beiden der vier Schaltelemente (Q3, Q4) mittels eines zweiten Verbindungspunktes verbunden sind und eine weitere Reihenschaltung bilden, wobei beide Reihenschaltungen zwischen den Ausgangsanschlüssen der Gleichspannungsleistungsquelle (E) parallel zueinander geschaltet sind;
wobei ein Ende der Entladungslampe (La) mit einer Sekundärseite eines Spartransformators (AT) verbunden ist, wobei das andere Ende der Entladungslampe (La) mit dem zweiten Verbindungspunkt verbunden ist, wobei die Primärseite des Spartransformators (AT) mit dem ersten Verbindungspunkt verbunden ist, wobei eine Anzapfung des Spartransformators (AT) über einen ersten Kondensator (C1) mit Masse verbunden ist,
wobei der Spartransformator (AT) und der erste Kondensator (C1) einen Starterteil (AT, C1) zur Erzeugung einer Spannung (Vla) bilden, um die Hochdruckentladungslampe (La) zu starten;
einen Steuerteil (2) zur Steuerung des Leistungswandlerteils;
einen Lampenstromerfassungsteil (31) zum Erfassen einer Amplitude eines Lampenstromes (Ila) zu der Hochdruckentladungslampe (La); und
einen Lampenspannungserfassungsteil (32) zum Erfassen einer Amplitude einer Lampenspannung (Vla) zu der Hochdruckentladungslampe (La), wobei der Steuerteil (2) während der Startphase (P1) einen Startbetrieb (P1) ausführt, um die Hochdruckentladungslampe (La) unter Verwendung der durch den Starterteil (AT, C1) erzeugten Spannung zu starten,
wobei die Startphase (P1) endet, wenn die Entladung der Entladungslampe (La) beginnt oder wenn eine vorherbestimmte Zeitdauer seit dem Start der Startphase (P1) abgelaufen ist,
wobei der Steuerteil (2) während einer Normalphase (P3) einen Normalbetrieb ausführt und den Leistungswandlerteil steuert, um einen Wechselstrom (Ila) an die Hochdruckentladungslampe zur Aufrechterhaltung des Leuchtens der Hochdruckentladungslampe (La) auszugeben,
**dadurch gekennzeichnet, dass** der Steuerteil (2) nach dem Ende der Startphase (P1) und bevor der Normalbetrieb startet einen Elektrodenheizbetrieb während einer Heizphase (P2) ausführt durch das Erhöhen der Frequenz des von dem Leistungswandlerteil bereitgestellten Lampenstroms (Ila), um höher zu sein als in dem Normalbetrieb, wobei der Steuerteil (2) den Leistungswandlerteil bei dem Elektrodenheizbetrieb regelt, um die Amplitude des Lampenstroms (Ila), die von dem Lampenstromerfassungsteil (31) erfasst wurde, in Übereinstimmung mit einer Zielstromamplitude (It) zu bringen,
wobei der Steuerteil (2) eine Entladungsbewertung ausführt zur Bewertung, abhängig von einem Vergleich der Amplitude der Lampenspannung (Vla) mit einem Referenzwert, ob die Entladung in der Entladungslampe (La) eine Glimmentladung oder eine Lichtbogenentladung ist, und die Zielstromamplitude (It) auf Basis eines Entladungsbewertungsergebnisses bestimmt.

2. Entladungslampenbeleuchtungsvorrichtung (1) für eine Hochdruckentladungslampe (La) aufweisend:
zwei Schaltelemente (Q3, Q4) und zwei Kondensatoren (C0a, C0b), die einen Leistungswandlerteil zum Empfangen einer Gleichspannungsleistung von einer Gleichspannungsleistungsquelle (E) und zum Ausgeben einer Wechselspannungsleistung bilden, wobei die zwei Kondensatoren (C0a, C0b) mittels eines ersten Verbindungspunktes verbunden sind und eine Reihenschaltung bilden und die zwei Schaltelemente (Q3, Q4) mittels eines zweiten Verbindungspunktes verbunden sind und eine weitere Reihenschaltung bilden, wobei beide Reihenschaltungen zwischen den Ausgangsanschlüssen der Gleichspannungsleistungsquelle (E) parallel zueinander geschaltet sind;
wobei ein Ende der Entladungslampe (La) mit einer Sekundärseite eines Spartransformators (AT) verbunden ist, wobei das andere Ende der Entladungslampe (La) mittels einer Induktivität (L1) mit dem zweiten Verbindungspunkt verbunden ist, wobei die Primärseite des Spartransformators (AT) mit dem ersten Verbindungspunkt verbunden ist, wobei eine Anzapfung des Spartransformators (AT) mittels eines ersten Kondensators (C1) und eines Widerstandes (R1) mit Masse verbunden ist, und wobei ein zweiter Kondensator (C2) zwischen dem ersten Verbindungspunkt und dem Verbindungspunkt zwischen der Induktivität (L1) und der Entladungslampe (La) verbunden ist,
wobei der Spartransformator (AT) und der erste Kondensator (C1) einen Starterteil (AT, C1) zur Erzeugung einer Spannung (Vla) bilden, um die Hochdruckentladungslampe (La) zu starten;
einen Steuerteil (2) zur Steuerung des Leistungswandlerteils;
einen Lampenstromerfassungsteil (31) zum Erfassen einer Amplitude eines Lampenstroms (Ila) zu der Hochdruckentladungslampe (La); und
einen Lampenstromerfassungsteil (32) zum Erfassen einer Amplitude einer Lampenspannung (Vla) zu der Hochdruckentladungslampe (La), wobei der Steuerteil (2) während der Startphase (P1) einen Startbetrieb (P1) ausführt, um die Hochdruckentladungslampe (La) unter Verwendung der durch den Starterteil (AT, C1) erzeugten Spannung zu starten,
wobei die Startphase (P1) endet, wenn die Entladung der Entladungslampe (La) beginnt oder wenn eine vorherbestimmte Zeitdauer seit dem Beginn der Startphase (P1) abgelaufen ist,
wobei der Steuerteil (2) während einer Normalphase (P3) einen Normalbetrieb ausführt und den Leistungswandlerteil steuert, um den Wechselstrom (Ila) zur Aufrechterhaltung des Leuchtens der Hochdruckentladungslampe (La) an die Hochdruckentladungslampe abzugeben,
**dadurch gekennzeichnet, dass** der Steuerteil (2) nach dem Ende der Startphase (P1) und bevor der Normalbetrieb beginnt während einer Heizphase (P2) einen Elektrodenheizbetrieb ausführt durch Erhöhen der Frequenz des durch den Leistungswandlerteil bereitgestellten Lampenstroms (Ila), um höher zu sein, als in dem Normalbetrieb, wobei der Steuerteil (2) den Leistungswandlerteil beim Elektrodenheizbetrieb regelt, um die Amplitude des durch den Lampenstromerfassungsteil (31) erfassten Lampenstroms (Ila) auf eine Zielstromamplitude (It) zu bringen,
wobei der Steuerteil (2) eine Entladungsbewertung ausführt zur Bewertung, abhängig von einem Vergleich der Amplitude der Lampenspannung (Vla) mit einem Referenzwert, ob die Entladung in der Entladungslampe (La) eine Glimmentladung oder eine Lichtbogenentladung ist, und die Zielstromamplitude (It) auf der Basis eines Entladungsbewertungsergebnisses bestimmt.

3. Entladungslampenbeleuchtungsvorrichtung (1) nach Anspruch 1 oder 2, wobei der Leistungswandlerteil aufweist:
einen Tiefsetzstellerschaltkreis (4) zum Tiefsetzstellen des eingespeisten Gleichstroms; und ist ein Vollbrückenschaltkreis (Q1, Q2, Q3, Q4) zum Wechselrichten der Gleichstromleistung, die von dem Tiefsetzstellerschaltkreis (4) ausgegeben wird.

4. Entladungslampenbeleuchtungsvorrichtung nach Anspruch 1, wobei der Leistungswandlerschaltkreis ein Vollbrückenschaltkreis (Q1, Q2, Q3, Q4) ist, und der Steuerteil (2) im Normalbetrieb die Ausgangsleistung (Ila, Vla) des Leistungswandlerteils auf der Basis eines Ein-Aus-Tastverhältnisses der Schaltelemente (Q3, Q4) steuert, die den Vollbrückenschaltkreis (Q1, Q2, Q3, Q4) bilden.

5. Entladungslampenbeleuchtungsvorrichtung nach Anspruch 2, wobei der Leistungswandlerteil ein Halbbrückenschaltkreis (Q3, Q4) ist und der Steuerteil im Normalbetrieb die Ausgangsleistung (Ila, Vla) des Leistungswandlerteils auf Basis eines Ein-Aus-Einschaltverhältnisses der Schaltelemente (Q3, Q4) steuert, die den Halbbrückenschaltkreis (Q3, Q4) bilden.

6. Entladungslampenbeleuchtungsvorrichtung nach irgendeinem der Ansprüche 1 bis 5, wobei die Zielstromamplitude (It) zwei oder mehr Werte aufweist.

7. Entladungslampenbeleuchtungsvorrichtung nach Anspruch 6, wobei der Steuerteil (2) die Zielstromamplitude (It) reduziert, wenn die Amplitude der durch den Lampenstromerfassungsteil (32) erfassten Lampenspannung (Vla) ansteigt.

8. Entladungslampenbeleuchtungsvorrichtung (1) nach Anspruch 7, wobei der Steuerteil (2) als Zielstromamplitude (It) einen Wert verwendet, der durch das Teilen einer vorherbestimmten Zielleistung durch die vom Lampenstromerfassungsteil (32) erfasste Lampenspannung erhalten wird.

9. Entladungslampenbeleuchtungsvorrichtung (1) nach irgendeinem der Ansprüche 1 bis 8, wobei der Steuerteil (2) eine Schaltfrequenz der Schaltelemente (Q1, Q2, Q3, Q4) des Leistungswandlerteils steuert.

10. Beleuchtungsbefestigungseinrichtung aufweisend: die Entladungslampenbeleuchtungsvorrichtung (1) nach irgendeinem der Ansprüche 1 bis 9; und einen Befestigungskörper (51), der die Entladungslampenbeleuchtungsvorrichtung (1) hat.

## Revendications

1. Dispositif d'allumage de lampe à décharge (1) pour une lampe à décharge haute pression (La), comprenant :
- quatre éléments de commutation (Q1, Q2, Q3, Q4) constituant une partie de conversion de puissance destinée à recevoir une puissance en courant continu d'une source d'alimentation en courant continu (E) et à délivrer une puissance en courant alternatif, deux des quatre éléments de commutation (Q1 et Q2) étant connectés par l'intermédiaire d'un premier point de connexion et constituant un circuit série et les deux autres des quatre éléments de commutation (Q3, Q4) étant connectés par l'intermédiaire d'un second point de connexion et constituant un autre circuit série, les deux circuits série étant connectés en parallèle entre les bornes de sortie de la source d'alimentation en courant continu (E) ;
une extrémité de la lampe à décharge (La) étant connectée à un côté secondaire d'un autotransformateur (AT), l'autre extrémité de la lampe à décharge (La) étant connectée au second point de connexion, le côté primaire de l'autotransformateur (AT) étant connecté au premier point de connexion, une prise de l'autotransformateur (AT) étant connectée à la masse par l'intermédiaire d'un premier condensateur (C1),
l'autotransformateur (AT) et le premier condensateur (C1) constituant une partie d'amorçage (AT, C1) destinée à générer une tension (Vla) permettant d'amorcer la lampe à décharge haute pression (La) ;
- une partie de commande (2) destinée à commander la partie de conversion de puissance ;
- une partie de détection de courant de lampe (31) destinée à détecter une amplitude d'un courant de lampe (Ila) fourni à la lampe à décharge haute pression (La) ; et
- une partie de détection de tension de lampe (32) destinée à détecter une amplitude d'une tension de lampe (Vla) appliquée à la lampe à décharge haute pression (La), la partie de commande (2) réalisant, pendant la période d'amorçage (P1), une opération d'amorçage (P1) consistant à amorcer la lampe à décharge haute pression (La) par utilisation de la tension générée par la partie d'amorçage (AT, C1),
la période d'amorçage (P1) se terminant lorsque la décharge de la lampe à décharge (La) commence ou lorsqu'une durée prédéterminée s'est écoulée depuis le début de la période d'amorçage (P1),
pendant une période normale (P3), la partie de commande (2) réalisant une opération normale et commandant la partie de conversion de puissance pour délivrer le courant alternatif (Ila) à la lampe à décharge haute pression afin de maintenir l'allumage de la lampe à décharge haute pression (La),
**caractérisé en ce qu'**après la fin de la période d'amorçage (P1) et avant que l'opération normale ne commence, la partie de commande (2) réalise une opération de chauffage d'électrodes pendant une période de chauffage (P2) par augmentation de la fréquence du courant de lampe (Ila) fourni par la partie de conversion de puissance pour qu'elle soit plus élevée que dans l'opération normale, la partie de commande (2) commandant, dans ladite opération de chauffage d'électrodes, la partie de conversion de puissance dans un mode de rétroaction de manière à régler l'amplitude du courant de lampe (Ila) détectée par la partie de détection de courant de lampe (31) à une amplitude de courant cible (It),
la partie de commande (2) réalisant une détermination de décharge consistant à déterminer, en fonction d'une comparaison de l'amplitude de la tension de lampe (Vla) à une valeur de référence, si la décharge dans la lampe à décharge (La) est une décharge luminescente ou une décharge d'arc, et déterminant l'amplitude de courant cible (It) sur la base d'un résultat de détermination de décharge.

2. Dispositif d'allumage de lampe à décharge (1) pour une lampe à décharge haute pression (La), comprenant :
- deux éléments de commutation (Q3, Q4) et deux condensateurs (C0a, C0b) constituant une partie de conversion de puissance destinée à recevoir une puissance en courant continu d'une source d'alimentation en courant continu (E) et à délivrer une puissance en courant alternatif, les deux condensateurs (C0a, C0b) étant connectés par l'intermédiaire d'un premier point de connexion et constituant un circuit série et les deux éléments de commutation (Q3, Q4) étant connectés par l'intermédiaire d'un second point de connexion et constituant un autre circuit série, les deux circuits série étant connectés en parallèle entre les bornes de sortie de la source d'alimentation en courant continu (E) ;
une extrémité de la lampe à décharge (La) étant connectée à un côté secondaire d'un autotransformateur (AT), l'autre extrémité de la lampe à décharge (La) étant connectée au second point de connexion par l'intermédiaire d'une inductance (L1), le côté primaire de l'autotransformateur (AT) étant connecté au premier point de connexion, une prise de l'autotransformateur (AT) étant connectée à la masse par l'intermédiaire d'un premier condensateur (C1) et d'une résistance (R1), et un second condensateur (C2) étant connecté entre le premier point de connexion et le point de connexion entre l'inductance (L1) et la lampe à décharge (La),
l'autotransformateur (AT) et le premier condensateur (C1) constituant une partie d'amorçage (AT, C1) destinée à générer une tension (Vla) permettant d'amorcer la lampe à décharge haute pression (La) ;
- une partie de commande (2) destinée à commander la partie de conversion de puissance ;
- une partie de détection de courant de lampe (31) destinée à détecter une amplitude d'un courant de lampe (Ila) fourni à la lampe à décharge haute pression (La) ; et
- une partie de détection de tension de lampe (32) destinée à détecter une amplitude d'une tension de lampe (Vla) appliquée à la lampe à décharge haute pression (La), la partie de commande (2) réalisant, pendant la période d'amorçage (P1), une opération d'amorçage (P1) consistant à amorcer la lampe à décharge haute pression (La) par utilisation de la tension générée par la partie d'amorçage (AT, C1),
la période d'amorçage (P1) se terminant lorsque la décharge de la lampe à décharge (La) commence ou lorsqu'une durée prédéterminée s'est écoulée depuis le début de la période d'amorçage (P1),
pendant une période normale (P3), la partie de commande (2) réalisant une opération normale et commandant la partie de conversion de puissance pour délivrer le courant alternatif (Ila) à la lampe à décharge haute pression afin de maintenir l'allumage de la lampe à décharge haute pression (La),
**caractérisé en ce qu'**après la fin de la période d'amorçage (P1) et avant que l'opération normale ne commence, la partie de commande (2) réalise une opération de chauffage d'électrodes pendant une période de chauffage (P2) par augmentation de la fréquence du courant de lampe (Ila) fourni par la partie de conversion de puissance pour qu'elle soit plus élevée que dans l'opération normale, la partie de commande (2) commandant, dans ladite opération de chauffage d'électrodes, la partie de conversion de puissance dans un mode de rétroaction de manière à régler l'amplitude du courant de lampe (Ila) détectée par la partie de détection de courant de lampe (31) à une amplitude de courant cible (It),
la partie de commande (2) réalisant une détermination de décharge consistant à déterminer, en fonction d'une comparaison de l'amplitude de la tension de lampe (Vla) à une valeur de référence, si la décharge dans la lampe à décharge (La) est une décharge luminescente ou une décharge d'arc, et déterminant l'amplitude de courant cible (It) sur la base d'un résultat de détermination de décharge.

3. Dispositif d'allumage de lampe à décharge (1) selon la revendication 1 ou 2, dans lequel
la partie de conversion de puissance comprend : un circuit hacheur abaisseur (4) destiné à abaisser la tension du courant continu appliqué ; et est un circuit en pont complet (Q1, Q2, Q3, Q4) destiné à faire onduler la puissance en courant continu délivrée par le circuit hacheur abaisseur (4).

4. Dispositif d'allumage de lampe à décharge selon la revendication 1, dans lequel
la partie de conversion de puissance est un circuit en pont complet (Q1, Q2, Q3, Q4), et la partie de commande (2) commande, dans l'opération normale, la puissance de sortie (Ila, Vla) de la partie de conversion de puissance sur la base d'un rapport cyclique passant/bloqué des éléments de commutation (Q3, Q4) constituant le circuit en pont complet (Q1, Q2, Q3, Q4).

5. Dispositif d'allumage de lampe à décharge selon la revendication 2, dans lequel
la partie de conversion de puissance est un circuit en demi-pont (Q3, Q4), et la partie de commande commande, dans l'opération normale, la puissance de sortie (Ila, Vla) de la partie de conversion de puissance sur la base d'un rapport cyclique passant/bloqué des éléments de commutation (Q3, Q4) constituant le circuit en demi-pont (Q3, Q4).

6. Dispositif d'allumage de lampe à décharge selon l'une quelconque des revendications 1 à 5, dans lequel
l'amplitude de courant cible (It) comprend deux valeurs ou plus.

7. Dispositif d'allumage de lampe à décharge selon la revendication 6, dans lequel
la partie de commande (2) réduit l'amplitude de courant cible (It) quand l'amplitude de la tension de lampe (Vla) détectée par la partie de détection de tension de lampe (32) augmente.

8. Dispositif d'allumage de lampe à décharge (1) selon la revendication 7, dans lequel
la partie de commande (2) emploie une valeur obtenue par division d'une puissance cible prédéterminée par l'amplitude de la tension de lampe détectée par la partie de détection de tension de lampe (32) comme amplitude de courant cible (It).

9. Dispositif d'allumage de lampe à décharge (1) selon l'une quelconque des revendications 1 à 8, dans lequel
la partie de commande (2) commande une fréquence de commutation des éléments de commutation (Q1, Q2, Q3, Q4) de la partie de conversion de puissance.

10. Appareil d'éclairage comprenant : le dispositif d'allumage de lampe à décharge (1) selon l'une quelconque des revendications 1 à 9 ; et un corps d'appareil (51) contenant le dispositif d'allumage de lampe à décharge (1).
